Europäisches Patentamt

European Patent Office

Office européen des brevets

(19)

(11) Veröffentlichungsnummer: **0 107 613**
A1

## (12) EUROPÄISCHE PATENTANMELDUNG

(21) Anmeldenummer: 83810389.3

(22) Anmeldetag: 29.08.83

(51) Int. Cl.³: **B 65 G 47/32**, B 65 B 35/06, B 65 B 23/12

(30) Priorität: 27.09.82 CH 5687/82

(71) Anmelder: SIG Schweizerische Industrie-Gesellschaft, CH-8212 Neuhausen am Rheinfall (CH)

(43) Veröffentlichungstag der Anmeldung: 02.05.84 Patentblatt 84/18

(72) Erfinder: Wipf, Alfred, Salpetererweg 14, D-7893 Jestetten (DE)

(74) Vertreter: White, William et al, PATENTANWALTS-BUREAU ISLER AG Postfach 6940 Walchestrasse 23, CH-8023 Zürich (CH)

(84) Benannte Vertragsstaaten: CH DE FR GB IT LI NL

(54) Anordnung zum Separieren von Gegenständen und zur Übergabe der separierten Gegenstände an ein Förderband.

(57) Zum Separieren und Weiterfördern werden die Gegenstände (G) aneinanderliegend mit einer ersten Fördervorrichtung (10) auf einer geeigneten Ebene nach unten verschoben. Eine Stossplatte (24) mit unter gleichem Winkel gegenüber der Horizontalen geneigten Stossfingern (24a, 24b, 24c) bewegt den vordersten Gegenstand (G1) parallel zu sich selbst vom nachfolgenden Gegenstand (G2) weg und bringt diesen in den Bereich eines Mitnehmers (32) einer zweiten Fördervorrichtung (30). Die Transportrichtungen der ersten Fördervorrichtung (10) und diejenige der zweiten Fördervorrichtung (30) schliessen einen stumpfen Winkel ein. Durch rasches Wegschieben des ersten Gegenstandes (G1) brechen etwaige Haftstellen mit dem zweiten Gegenstand (G2), der überdies auf einer hinteren Partie (26) der Stossplatte (24) aufliegt und dadurch abgebremst wird. Damit lassen sich Gegenstände ohne sich noch einmal zu berühren separieren, wodurch kein Antrieb oder Beschädigung der Oberfläche entstehen kann.

Anordnung zum Separieren von Gegenständen und zur Uebergabe
der separierten Gegenstände an ein Förderband

Die vorliegende Erfindung betrifft eine Anordnung zum
Separieren von Gegenständen gemäss dem Oberbegriff des unabhängigen Patentanspruchs 1.

Gegenstände der Süsswarenindustrie in Riegelform werden oftmals einzeln verpackt, jedoch vom Fertiger werden sie aneinander anliegend oder höchstens mit geringem Abstand der Weiterverarbeitung zugeleitet. Um die einzelnen Stücke, die
teilweise noch aneinander haften können, sei es, dass ein
Tropfen einer zuckerhaltigen Flüssigkeit zwischen zwei Riegel
fallen kann oder sei dies durch Brauen am Auflagefuss
einem Schokoladeüberzug. Dazu muss neben der Separierbewegung
noch eine zusätzliche Teilungsbewegung ausgeführt werden.

- 2 -

Beispiele zur Lösung dieser Aufgabe sind bekannt: In der
DE-OS 2 250 583 ist ein sich drehendes Gestell zwischen dem
stromabwärtigen Ende einer ersten Förderanlage und dem stromaufwärtigen Ende einer höher gelegenen zweiten Förderanlage
vorgesehen. Das Gestell besitzt mehrere Etagen zum Ueberführen
der Gegenstände. Damit werden die Gegenstände von der Auflageplatte am Ende des ersten Förderbandes vorwärts und aufwärts
bewegt. Wenn jedoch zwei Gegenstände zusammenkleben, kann auch
der nachfolgende Gegenstand etwas angehoben werden, bis er
unter dem Eigengewicht abbricht. Dieses Abbrechen kann aber
einen allfälligen Schokoladeüberzug beschädigen, oder bei
Süsswaren, die beispielsweise eine Schicht von geblähtem
Reis aufweisen, Beschädigungen hervorrufen. Zudem müssen
bei einem solchen Gestell Mittel vorhanden sein, um die
Etagen genau in der vorgeschriebenen Ausrichtung zu halten.
Dies wiederum verteuert den Bau einer solchen Transportvorrichtung.

Ein weiterer Vorschlag gemäss der DE-OS 2 849 586 löst dieses
Problem dadurch, dass mit einem Stufenförderer, ähnlich den
Stufen einer Rolltreppe, die Gegenstände vom ersten Förderband abgehoben und einem höher gelegenen Förderband zugeführt
werden.

Die Abtrennung zusammengehaltener Gegenstände erfolgt mittels
Druck auf den jeweils nachfolgenden Gegenstand, entweder

- 3 -

durch einen angetriebenen Rotor mit Ausnehmungen und Flügeln oder durch Pressluft, die aus einer Düse auf die Oberseite der Gegenstände geblasen wird. Die Stirnflächen benachbarter Gegenstände können jedoch, insbesonder bei unregelmässigen Formen, aneinander reiben und damit den Ueberzug beschädigen.

Demgemäss ist es eine Aufgabe der Erfindung, mit nur wenig bewegten Teilen eine leistungsfähige, betriebssichere und nur geringe Wartung benötigende Anordnung zum Separieren und Weitertransport von Gegenständen, die leicht beschädigt werden können, zu schaffen. Auch soll die Einstellung auf verschiedene Formate einfach durchführbar sein.

Erfindungsgemäss wird dies durch die Merkmale im kennzeichnenden Teil des unabhängigen Patentanspruchs 1 erreicht.

Ein Ausführungsbeispiel der Erfindung wird nachfolgend anhand der Zeichnung beschrieben. Es zeigen:

Fig. 1  einen Aufriss des Antriebes zusammen mit der Uebergabestelle,

Fig. 2  einen Grundriss der Uebergabestelle gemäss Fig. 1, jedoch in grösserem Massstab,

Fig. 3a bis 10A  je einen Grundriss ähnlich Fig. 2 in acht
             verschiedenen Arbeitsphasen, und


Fig. 3B bis 10B  die den Grundrissen gemäss Fig. 3A bis 10A
             zugehörigen Seitenrisse.


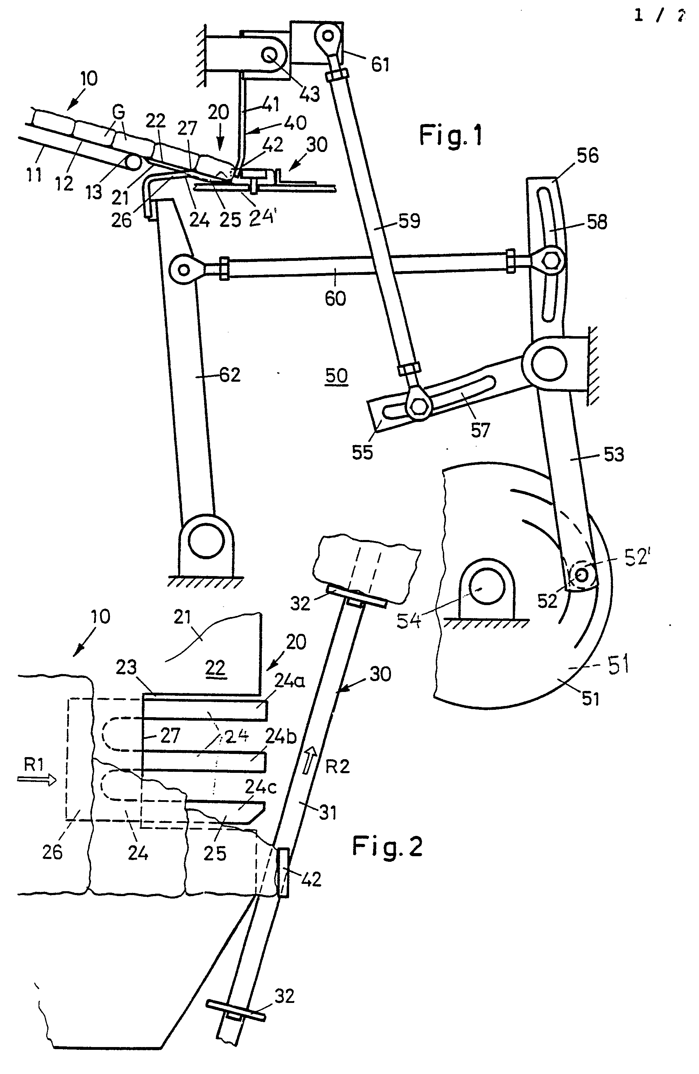

Die Anordnung gemäss Fig. 1 und 2 umfasst eine erste Fördervorrichtung 10, eine Uebergabevorrichtung 20 und eine zweite
Fördervorrichtung. Die Transportrichtung R1 der ersten Fördervorrichtung 10 und die Transportrichtung R2 der zweiten Fördervorrichtung 20 schliessen einen stumpfen Winkel von beispielsweise etwa 105° ein. Die erste Fördervorrichtung 10 ist in
Transportrichtung R1 gegenüber der Horizontalen um beispielsweise etwa 16° geneigt.


Die erste Fördervorrichtung 10 besteht aus einem Förderband
11, auf dessen oberem Trum 12 die zu transportierenden Gegenstände G liegen. Am stromabwärtigen Ende 13 des oberen Trums
12 schliesst sich eine Gleitfläche 22 einer ortsfesten Trägerplatte 21 an. Wie Fig. 2 zeigt, weist die Trägerplatte 21
eine Ausnehmung 23 auf, in der die hin- und herbewegte Stossplatte 24 der Uebergabevorrichtung 20 die Gleitebene 22 durchdringt. Diese Stossplatte 24 besitzt beispielsweise drei
Stossfinger 24a, 24b, 24c. In der in Fig. 2 gezeigten Ausgangsstellung liegen die oberen Flächen 24' der vorderen Partien 25
der Stossfinger 24a, 24b, 24c in der Ebene der Gleitfläche 22 während die hinteren Partien 26 wenigstens angenähert horizontal verlaufen. Damit ergibt sich eine Kante 27, die sich in Fig. 2 mit der hinteren Begrenzungslinie der Ausnehmung 23 der Trägerplatte 21 deckt. Diese Kante 27 und deren Bedeutung wird weiter unten noch näher beschrieben.

Die zweite Fördervorrichtung 30 besteht aus einem Förderband 31 mit im Abstand voneinander angeordneten Mitnehmern 32 in einer aus der Transporttechnik bekannten Ausführungsform.

Ueber der Uebergabevorrichtung 20 befindet sich ein Anschlag 40, bei dem ein drehbar gelagerter Hebelarm 41 eine Anschlagplatte 42 trägt. Das Drehlager 43 des Hebelarmes 41 ist gestellfest.

Ein Antriebssystem 50 mit zwei auf gleicher Achse 54 befestigten Kurvenscheiben 51, 51' zwei Hebel 53, 53' antreibend, die ihrerseits fest mit Hebel 55 und 56 verbunden sind, bewirken die Bewegungen von Stossplatte 24 und Anschlagplatte 42. Die nichtsichtbare Kurvenscheibe 51' mit Abtastrolle 52' treibt den Hebel 53', der mit dem sichtbaren Hebel 55 starr verbunden ist. Hebel 53 ist starr mit Hebel 56 verbunden. Die Hebel 55, 56 sind mit Kulissen 57, 58 ausgerüstet, in denen Stangen 59, 60 zur Uebertragung der Bewegung verstellbar befestigt sind, um die Hübe von Stossplatte 24 und Anschlagplatte 42 auf das Format der Gegenstände G einzustellen. Jede Stange 59, 60 ist drehbeweglich an einem gestellfest gelagerten Schwenkhebel 61, 62 angelenkt.

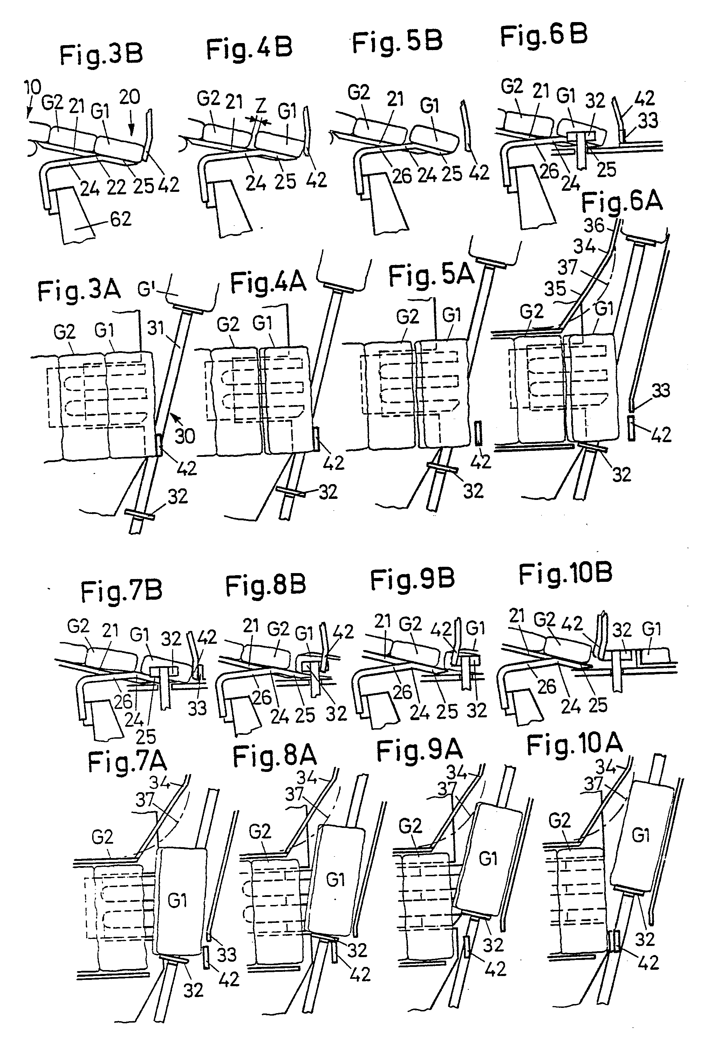

Die Wirkungsweise und zum Teil die genaue Formgebung einzelner Teile, wie die der genannten Stossplatte 24 wird nachfolgend anhand der Fig. 3A bis 10A und 3B bis 10B erläutert. Fig. 3A und 3B zeigen den Grundriss bzw. den Aufriss der Anlage in der Ausgangsstellung, d.h. beim Drehwinkel $0^{o}$ der Kurvenscheiben 51, 51'.

Hierbei liegt der vorderste Gegenstand G1, der von der ersten Fördervorrichtung 10 an die Uebergabevorrichtung 20 transportiert wurde sowohl auf der Gleitfläche 22 der Trägerplatte 21, als auch auf der vorderen Partie 25 der Stossplatte 24 auf, und seine lange Stirnseite liegt an der Anschlagplatte 42 an. Die zweite Fördervorrichtung 30 hat soeben einen vorderen Gegenstand G' weggeschoben, und ein Mitnehmer 32 bewegt sich auf den vordersten Gegenstand G1 zu.

Fig. 4A und 4B zeigen den Zeitpunkt, wenn sich die Kurvenscheiben um $30^{o}$ gedreht haben. Im Aufriss in Fig. 4B zeigt sich deutlich, wie die Stossfinger 24a, 24b, 24c der Stossplatte 24 den vordersten Gegenstand G1 vom zweiten Gegenstand G2 parallel zu sich selbst wegstossen, so dass ein Zwischenraum Z entsteht. Im Grundriss Fig. 4A zeigt sich, dass die Anschlagplatte 42 einen gleich langen Weg zurückgelegt hat, und dass nun der erste Gegenstand G1 in den Weg des Mitnehmers 5a hineingeschoben wurde.

Die Lage bei 60° Drehwinkel der Kurvenscheiben 51, 51' gemäss
Fig. 5A und 5B lässt erkennen, dass sich die Anschlagplatte
42 vom ersten Gegenstand G1 entfernt hat und dass nun der
zweite Gegenstand G2 mit seiner vorderen unteren Kante auf
der hinteren abgewinkelten Partie 26 der Stossplatte 24 aufliegt.

Diese Bewegungen der Stossplatte 24, nämlich Wegstossen des
ersten Gegenstandes G1 parallel zu sich selbst und Zurückhalten des zweiten Gegenstandes G2 auf der abgewinkelten
hinteren Partie 26 der Stossplatte bewirkt ein Brechen von
Haftstellen zwischen den beiden Gegenständen G1 und C2. Der
kurz vor der Berührung mit dem ersten Gegenstand G1 stehende
Mitnehmer 32 der zweiten Fördervorrichtung 30 trifft gemäss
Fig. 6A und 6B, bei 90° Drehwinkel auf einen nur durch die
drei Stossfinger 24a, 24b, 24c unterstützten Gegenstand G1.
Die Anschlagplatte 42 befindet sich nun in einer Flucht mit
einer Leitschiene 33 der zweiten Fördervorrichtung.

Die dieser Leitschiene 33 gegenüberliegende Leitschiene 34
kann entweder eine von der geradverlaufenden Partie 36 abgewinkelte Partie 35 zum Ablenken des mit dem Mitnehmer 32
gestossenen Gegenstandes G1 aufweisen, oder sie kann unterbrochen sein, und eine rotierende Führungsglocke 37 kann
vorhanden sein, um die gefährdete vordere linke Kante des

- 8 -

Gegenstandes G1 sanft nach rechts zu leiten.

In der nächsten Phase, entsprechend 120° erfolgt gemäss
Fig. 7A, 7B das Ausstossen des ersten Gegenstandes G1
dadurch, dass der Berührungspunkt des Mitnehmers 32 am Gegenstand G1 auf einer parallel zur Transportrichtung liegenden
Geraden liegt, die neben dem Schwerpunkt des Gegenstandes G1
verläuft, so dass ein Drehmoment auf den Gegenstand G1 einwirkt, durch das er im Uhrzeigersinn gedreht wird.

Die drei letzten Fig. 8A, 8B, 9A, 9B und 10A, 10B zeigen die
Winkellagen 150°, 180° sowie 220° bis 330° der Kurvenscheiben
51, 51'. In diesen Phasen zieht sich einerseits die Stossplatte 24 in die Ebene der Gleitfläche 22 der Trägerplatte 21
zurück und unterstützt nun den Gegenstand G2, und die Anschlagplatte 42 bewegt sich hinter dem Mitnehmer 32 zur Ausgangslage zurück.

Die phasenweise Darstellung zeigt deutlich, dass der Transport der Gegenstände G durch die Stossplatte 24 mit der
geneigten vorderen Partie 25 eine relativ grosse Beschleunigung in den Bereich des Quertransportes erlaubt. Durch diese

- 9 -

Beschleunigung wird der vorderste Gegenstand G1 vom Gegenstand G2 losgetrennt, und es entsteht ein Zwischenraum Z
zwischen erstem und zweitem Gegenstand, so dass keine
Berührung stattfinden kann, und der erste Gegenstand G1 kann
daher am zweiten Gegenstand G2 nicht reiben. Die hintere
Partie 26 mit der horizontalen Fläche verzögert den Vorschub
des zweiten Gegenstandes G2 und unterstützt damit die sichere
Trennung der beiden Gegenstände G1 und G2.

Patentansprüche

1. Anordnung zum Separieren von auf einem ersten Förderband
quer zur Transportrichtung liegenden länglichen, längsseitig mit höchstens einem schmalen Abstand aneinandergereihten Gegenständen und zur Uebergabe der separierten
Gegenstände an ein mit Mitnehmern ausgerüstetes zweites
Förderband, auf dem die Gegenstände im Abstand voneinander
in Richtung ihrer Längsachse einer Verarbeitungsstelle,
insbesondere einer Verpackungsmaschine, zugeführt werden,
dadurch gekennzeichnet, dass der obere Trum des ersten
Förderbandes (11) zum oberen Trum des zweiten Förderbandes
(30) hin geneigt verläuft, dass die Transportrichtung des
ersten Förderbandes mit der Transportrichtung des zweiten
Förderbandes einen stumpfen Winkel einschliesst, und dass
an der Uebergabestelle zwischen erstem und zweitem Förderband eine translatorisch hin- und herbewegte Uebergabevorrichtung (20) mit einer geneigt angeordneten Transportfläche (24') vorhanden ist.


2. Anordnung nach Patentanspruch 1, dadurch gekennzeichnet,
   dass die Uebergabevorrichtung (20) eine an die Transportfläche (24') anschliessende Auflagefläche (24) zum Abbremsen der Bewegung des jeweils dem übergebenen Gegenstand
   (G1) nachfolgenden Gegenstandes (G2) aufweist.


3. Anordnung nach Patentanspruch 2, dadurch gekennzeichnet,
   dass zwischen dem stromabwärtigen Ende des ersten Förderbandes (10) und der Uebergabevorrichtung (20) eine Gleitfläche (22) mit gleicher Flucht wie die Ebene des oberen
   Trums dieses ersten Förderbandes (11) vorhanden ist.


4. Anordnung nach Patentanspruch 3, dadurch gekennzeichnet,
   dass die Gleitfläche (22) die obere Ebene einer gegabelten
   Trägerplatte (21) ist.


5. Anordnung nach Patentanspruch 4, dadurch gekennzeichnet,
   dass die Uebergabevorrichtung (20) aus die Gabelzinken
   der Trägerplatte (21) durchdringenden Fingern (24a, 24b,
   24c) gebildet ist.

6. Anordnung nach einem der vorangehenden Patentansprüche 1 bis 5, dadurch gekennzeichnet, dass ein wenigstens angenähert in Transportrichtung des ersten Förderbandes (10) hin- und herbewegtes Anschlagelement (42) vorhanden ist, um in einer ersten Endstellung den ersten Gegenstand (G1) auf der Transportfläche (24) der Uebergabevorrichtung (20) anzuhalten und in der zweiten Endstellung einen Umlenkanschlag für die in Transportrichtung des zweiten Förderbandes (30) betrachtete hintere Partie des ersten Gegenstandes (G1) zu bilden.

7. Anordnung nach Patentanspruch 6, dadurch gekennzeichnet, dass die Antriebe für die Uebergabevorrichtung (20) einerseits und für das Anschlagelement (42) anderseits durch Kurvenscheiben (51, 51') gesteuerte Abtastrollen (52, 52') an Hebel (53, 53') sind, an welchen Hebel (53, 53') Antriebsstangen (59, 62) zur Uebertragung der Bewegung auf Schwenkhebel (61, 62) angelenkt sind.

8. Anordnung nach Patentanspruch 7, dadurch gekennzeichnet, dass die Hebel (55, 56) mit je einer Kulisse (57, 58) zur Einstellung des Hubes der Antriebsstangen (59, 62) versehen sind.

9. Anordnung nach einem der Patentansprüche 1 bis 8, dadurch gekennzeichnet, dass in der durch die Gegenstände (G)

zu umrundenden Ecke zwischen erstem und zweitem Förderband
(10, 30) eine Förderrolle (37) vorhanden ist.

Fig.1

Fig.2

Fig.3B Fig.4B Fig.5B Fig.6B

Fig.3A Fig.4A Fig.5A Fig.6A

Fig.7B Fig.8B Fig.9B Fig.10B

Fig.7A Fig.8A Fig.9A Fig.10A

0107613

**Europäisches Patentamt**

**EUROPÄISCHER RECHERCHENBERICHT**

Nummer der Anmeldung

EP 83810389.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>DE - A - 2 214 656</u> (SCHWEIZERISCHE INDUSTRIEGESELLSCHAFT)<br>* Gesamt * | 1,6,7, 8 | B 65 G 47/32<br><br>B 65 B 35/06<br><br>B 65 B 23/12 |
| A | <u>CH - A - 362 364</u> (SCHWEIZERISCHE INDUSTRIEGESELLSCHAFT)<br>* Fig. 1 * | 1 | |
| A | <u>CH - A - 336 751</u> (HUNTLEY & PALMERS LIMITED)<br>* Fig. 19; Seite 3, Absatz 3 * | 1,9 | |
| A | <u>GB - A - 1 179 142</u> (SCHWEIZERISCHE INDUSTRIEGESELLSCHAFT)<br>* Fig. 1 * | 7,8 | |
| D,A | <u>DE - A - 2 250 583</u> (PACKAGE MACHINERY CO.) | | |
| D,A | <u>DD - A - 140 132</u> (ALISYNCRO) | | |

RECHERCHIERTE SACHGEBIETE (Int. Cl. ³)

B 65 G 47/00

B 65 B 23/00

B 65 B 35/00

B 65 B 65/00

Der vorliegende Recherchenbericht wurde für alle Patentansprüche erstellt.

| Recherchenort | Abschlußdatum der Recherche | Prüfer |
|---|---|---|
| WIEN | 30-12-1983 | PISSENBERGER |